# EUROPEAN PATENT SPECIFICATION

(11) **EP 1 364 772 B1**
(45) Date of publication and mention of the grant of the patent: **21.06.2006**
(21) Application number: 02425323.9
(22) Date of filing: 22.05.2002
(51) Int. Cl.: B32B 1/08, B32B 27/04, B32B 5/08, F16L 9/133, B64D 13/00

(54) **Multi-layer ducts for air distribution in air conditioning systems for vehicles**
Mehrschichtluftverteilungsschläuche für Fahrzeugklimaanlagen
Conduits multicouches pour distribution d'air utilisés dans les systèmes d'air conditionné de véhicules

(43) Date of publication of application: 26.11.2003
(73) Proprietor: Salver S.p.A., 00135 Roma (IT)
(72) Inventor: Innocente, Francesco, 73015 Salice Salentino (Lecce) (IT); Capoccello, Daniele, 73015 Salice Salentino (Lecce) (IT)
(74) Representative: Fioravanti, Corrado

(56) References cited:
- EP-A- 0 223 664
- WO-A-90/13592
- US-A- 5 062 457
- PATENT ABSTRACTS OF JAPAN vol. 013, no. 041 (M-791), 30 January 1989 (1989-01-30) & JP 63 249629 A (KOEI SANGYO KK), 17 October 1988 (1988-10-17)
- DATABASE WPI Section Ch, Week 198402 Derwent Publications Ltd., London, GB; Class A32, AN 1984-008013 XP002216060 & JP 58 201824 A (MITSUBISHI RAYON CO LTD) , 24 November 1983 (1983-11-24)

## Description

The present invention relates to a multi-layer duct for distributing air in air conditioning systems for vehicles, in particular for aircrafts, having the characteristics defined in the preamble to Claim 1.

It is known that the air conditioning and climatisation systems fitted in most modern aeroplanes use air distribution ducts of a composite material, both in parts of the system that operate under pressure and for those that operate under depression. In general, these ducts of composite material are made up of several superimposed layers of a prepreg of phenolic resin reinforced with glass fibre fabric. Such a structure offers good mechanical properties, reduced fluid leakage (especially if an extra layer of resin has been applied) and, most importantly, the ability to satisfy stringent safety requirements on flame resistance and the emission of toxic fumes and gas in the event of a fire. The ducts are generally fixed to the structure of the vehicle by means of connector elements arranged at a given distance from each other and provided with clamps for tightening around the circumference of the duct itself. Such a structure weighs approximately 730-1300 grams per square metre of the duct's lateral surface.

The aircraft industry's need for ever lighter solutions to find in order to contribute to the reduction of the total weight of aeroplanes, stimulates to propose new materials and new construction solutions.

EP-A-223664 discloses an impregnated woven fabric made out of glass and carbon fibres, as well as its use in aircraft interior panels. The use of such a fabric in a tubular structure is not mentioned.

JP-A-63249629 discloses a multilayered tube comprising one layer of a prepreg of resin reinforced with glass fibre fabric, and one layer of a prepreg resin reinforced with carbon fibre fabric. No other fibre type is mixed or inserted within the glass or the carbon fibre fabrics.

JP-A-58201824 describes a layer used for the manufacture of tubular products, comprising a woven fabric of non-carbon and carbon fibres impregnated by a resin, as well as its use as a fishing rod or a golf shaft. The non-carbon fibre can be selected among polyester, nylon and glass; no second fibre layer is mentioned in the obtained structure.

WO-A-9013592 discloses an impregnated fabric made out of a yam comprising glass, aramid and viscose fibres, possibly blended with carbon fibres, as well as its use in bearings or compressor rotor blades. The use of such a fabric in a tubular structure is not mentioned, apart for testing purposes.

According to a first aspect of the present invention there is provided a multilayer duct which has the characteristics claimed in Claim 1.

A duct thus constructed provides a performance similar to those currently used in the art, but with a significant weight reduction.

Preferred embodiments of the invention are defined in the dependent Claims.

Several preferred, but non-limitative embodiments of the invention will now be described, with reference to the appended drawings, in which:
Figure 1 is a partially sectioned, schematic perspective view of a first embodiment of a duct according to the present invention;
Figure 2 is a schematic view in cross section of the duct of Figure 1;
Figure 3 is a partially sectioned, schematic perspective view of a second embodiment of a duct of the invention;
Figure 4 is a schematic view in cross section of the duct of Figure 3;
Figure 5 is a schematic view in longitudinal section of the duct of Figure 3;

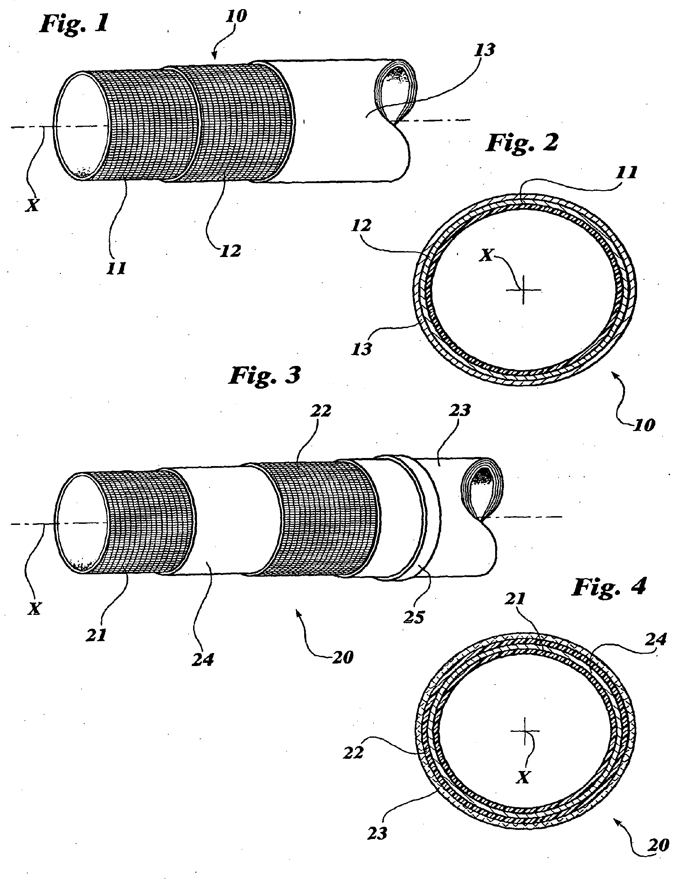

With reference to Figures 1 and 2, a multilayer duct for use in the air distribution system of a vehicle, in particular of an aircraft, in the parts of the system that work under pressure, is generally indicated 10.

The duct indicated 10 has a coaxial structure about an axis x. In the rest of this description, and in the Claims, terms and expressions indicating positions and orientations, such as "inner" or "outer", should be understood in relation to the central axis x of the multi-layer duct in its finished condition. The present embodiment of the invention provides for an innermost layer, indicated 11, of a prepreg of phenolic resin reinforced with a hybrid glass and carbon fibre fabric, preferably of a plain weave type. More externally, a second layer indicated 12 of a prepreg of phenolic resin reinforced with glass fibre fabric, preferably of a plain weave type. Above the layer just mentioned is provided a third, outermost layer, indicated 13, is superimposed on the layer 12 and consists only of phenolic resin.

The prepreg material of phenolic resin reinforced a hybrid glass and carbon fibre fabric, preferably of a plain weave type, which forms the layer 11, is commonly used for the internal lining panels of the passenger compartments of aircrafts. The expression "plain weave" refers to the way in which the fibres are woven together: each strand (group of several filaments) of the weft is passed transversely, in sequence, once above and once beneath the longitudinal strands of the warp. The next weft strand follows the same path but in reverse, that is first beneath and then above the warp strands. By way of example, the Applicant made layer 11 out of Vicotex® prepreg manufactured by Hexcel Composites, with a weight per unit surface area of 320 g/m² and a percentage of fibres (glass and carbon) by volume of 39%. The density of the phenolic resin was of 1.15 g/cm³, while the average density of the reinforcing fabric (E glass + high resistance carbon fibres, 3000 filaments per strand) is 2.00 g/cm³.

The prepreg material of phenolic resin reinforced with glass fibre, which forms the layer 12, is already commonly used in the art to manufacture air distribution ducts for aircraft. Parameters relating to the type of weave of the reinforcing fabric, the percentage of resin and the like can of course vary case by case, since these characteristics are not essential for the purposes of the present invention. Purely by way of example, the Applicant made the layer 12 out of Hexply® prepreg manufactured by Hexcel Composites, which had a weight per unit surface area of 120 g/m² and a percentage by volume of glass fibres of 23%. The density of the phenolic resin was of 1.15 g/cm³, while the density of the glass fibres (E glass) was 2.60 g/cm³.

Purely by way of example, the Applicant made the layer 13 using a commercially produced resin, Uravar 78900 from Hexcel Composites, having a weight of around 25 grams per square metre of coated surface. The purpose of this phenolic resin layer, spread over the external surface of the duct 10, is to make it more fluid tight and to limit leakage within the design requirements.

This configuration makes it possible to achieve a weight of around 465 grams per square metre of lateral surface of the duct. A duct thus configured gives a performance comparable to that of a conventional multi-layer duct of a similar section or diameter, which would weigh about 730 grams per square metre of lateral surface of duct.

This configuration provides advantages over ducts manufactured solely with prepreg reinforced with glass fibres fabric. In fact, the layer reinforced with a hybrid fabric is in contact with the fluid (air) and, thanks to its greater electrical conductivity compared to layers reinforced with glass fibres fabric (due to the presence of carbon), it prevents any accumulation of electrostatic charges on the inner surface of the duct as a result of the flow of fluid, such as on the contrary occurs in conventional ducts. In the prior art, this problem is solved by adding a conductor element to the inner surface, in the form of a conductive varnish, graphite powder or even by sticking on metal conductors, thereby increasing weight and making manufacture more complex.

On the outside, the presence of a prepreg layer reinforced with glass fibre fabric increases electrical insulation, as required for protecting the duct from induced currents which are due to the electrical cables which pass very close to the air conditioning system ducts.

The duct 10 of the invention is manufactured according to methods known in the art. Firstly, the layers 11 and 12 are arranged in sequence on a mandrel of the appropriate section for the duct to be manufactured.

This mandrel can be of a reusable type (with a metal core) or of a disposable type (with a plaster core). The mandrel, with the layers arranged on it, is wrapped in a vacuum bag and placed in an autoclave where it undergoes a cure cycle (consisting of a succession of steps each of a predetermined duration in which temperature and pressure are established according to predetermined plans). At the end of the cure process, the duct is separated from the metal core (by extracting the core) or from the plaster core (by breaking this latter). In order to make it easier to remove the mandrels, their surface is treated with an anti-adhesive substance.

The resin layer, indicated 13, is then applied to the outer surface of the second layer, either by a spray method or by brush or spatula, according to the characteristics of the selected resin. In order to ensure that the manufacturing method is repeatable, it is best to use an automated system to apply the resin.

With reference to Figures 3 to 5, a multi-layer duct according to a second embodiment of the invention for use in an air distribution system of a vehicle, in particular an aircraft, in parts thereof that operate in depression, is as a whole indicated 20.

Considered from the inside to the outside, the duct 20 according to the present invention has a first layer 21 and a second layer 22, both of prepreg of phenolic resin reinforced with a hybrid fabric of glass and carbon fibres, preferably of a plain weave type, such as was described earlier. Outwardly, a third layer, indicated 23, of prepreg of phenolic resin reinforced with glass fibre fabric, preferably of a plain weave type, as described earlier, is arranged on the second layer 22. A reinforcing layer 24 of non-woven fabric, preferably made of a fire resistant type rayon viscose fibre, is interposed between the first layer 21 and the second layer 22. By way of example, the Applicant made the reinforcing layer 24 of a rayon viscose non-woven fabric from Hexcel Composites which is 0.100mm thick and weighs 40 g/m².

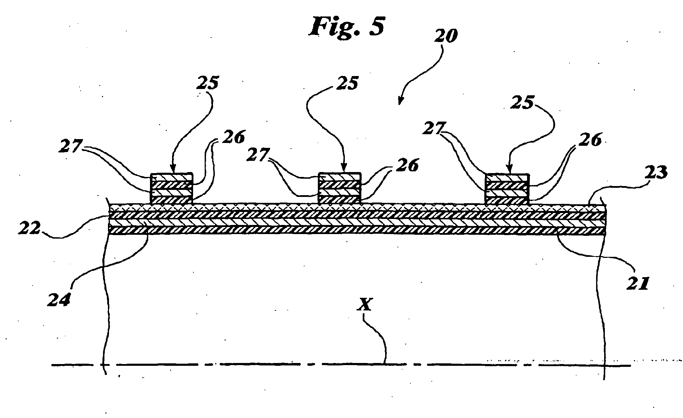

The reinforcing layer 24 improves the mechanical characteristics of the duct of the invention, in particular in those parts of the system that operate in depression. In order further to improve these mechanical characteristics, the duct 20 is provided externally with annular reinforcement formations 25 (shown in Figures 3 and 5), coaxial with the duct and regularly spaced along the length thereof. These annular formations 25 are formed by a plurality of alternate layers 26, 27 of prepreg of phenolic resin reinforced with hybrid fabric of glass and carbon fibres and of prepreg of phenolic resin reinforced with glass fibres respectively. In other words, the layers 26 are constituted by the same material as the layers 21 and 22, while the layers 27 are constituted by the same material as the layer 23.

This configuration makes it possible to hold the weight at around 930 grams per square metre of lateral surface of the duct. A duct made in this way provides a performance similar to that of a conventional multi-layer duct having the same section (or cross sectional shape) or diameter, which would weigh around 1270 grams per square metre of lateral surface.

Naturally, the particular arrangement of the layers also enables this second embodiment to provide the advantages with regard to the accumulation of electrostatic charges and to electrical insulation, which were described earlier in greater detail.

The manufacturing method of the duct 20 is naturally similar to that of the duct 10, except for the total number of layers of prepreg and for the application of phenolic resin, which is missing here.

The sections of multi-layer ducts shown in the appended drawings are all circular. In reality the ducts of the invention could be of any shape: circular, elliptical, rectangular or even irregular. The orientation of the prepreg layers of the duct of the invention, which in the drawings may appear to be orientated at 0° with respect to the length of the duct, may vary through any orientation in dependence on the requirements of a specific project. In addition, the number of prepreg layers reinforced with hybrid fabric can be more than two, while the type of resin can be other than the phenolic resin used here.

In general then, the shape, configuration, number of layers, type of resin or the commercially produced products indicated in the embodiments described here by way of example, must not be seen as limiting the scope of the present invention.

## Claims

1. A multi-layer duct (10, 20) for air distribution in air conditioning systems for vehicles, in particular aircrafts, which includes at least one layer (12, 23) of a prepreg of resin reinforced with glass fibre fabric and **characterised in that** it includes at least one layer (11; 21, 22) of a prepreg of resin reinforced with a hybrid fabric of glass fibre and carbon fibre, the said layers being superimposed coaxially.

2. A duct according to Claim 1, **characterised in that** at least one layer (11; 21, 22) of prepreg of resin reinforced with hybrid fabric of glass fibre and carbon fibre includes at least one layer (11, 21) arranged in the radially innermost position, so as to be in contact with the air piped.

3. A duct according to either preceding Claim, in which the said at least one layer (23) of prepreg of resin reinforced with glass fibre fabric includes a layer in the radially outermost position, so as to electrically insulate the portion enclosed by the said layer from the external environment.

4. A duct according to any preceding Claim, which also includes an external coating (13) of resin alone.

5. A duct according to Claim 3, **characterised in that** it has:
- a first inner layer (21) and second outer layer (22) both of prepreg of resin reinforced with a hybrid fabric of glass fibre and carbon fibre;
- a reinforcing layer (24) of non-woven fabric interposed between the said first layer (21) and the said second layer (22) ; and
- a final layer (23) of prepreg of resin reinforced with glass fibre fabric, arranged on the said layer (22).

6. A duct according to Claim 5, **characterised in that** it also presents annular reinforcing formations (25) coaxial of the said duct and arranged along its length.

7. A duct according to Claim 6, in which the said reinforcing formations (25) are formed by a plurality of alternate annular layers (26, 27) of prepreg of phenolic resin reinforced with hybrid fabric of glass fibre and carbon fibre and of prepreg of phenolic resin reinforced with glass fibre fabric.

8. A duct according to Claim 4, **characterised in that** it has:
- an innermost layer (11) of prepreg of resin reinforced with glass fibre and carbon fibre,
- an intermediate layer (12) of prepreg of resin reinforced with glass fibre fabric, and
- an outermost layer (13) of resin alone.

9. A duct according to any preceding Claim, **characterised in that** the glass fibre reinforcing fabric and the hybrid fabric of glass fibre and carbon fibre are both of a plain weave type.

## Patentansprüche

1. Mehrschichtiger Kanal (10, 20) für die Verteilung von Luft in Klimaanlage-Systemen für Fahrzeuge, im Besonderen für Flugzeuge, wobei der Kanal zumindest eine Schicht (12, 23) eines Prepregs aus einem Harz aufweist, das mit einem Glasfasergewebe verstärkt ist, und wobei der Kanal **dadurch gekennzeichnet ist, dass** er zumindest eine Schicht (11; 21, 22) eines Prepregs aus einem Harz aufweist, das mit einem Hybridgewebe aus Glasfasern und Carbonfasern verstärkt ist, wobei die Schichten koaxial übereinander gelegt werden.

2. Kanal gemäß Anspruch 1, **dadurch gekennzeichnet, dass** zumindest eine Schicht (11; 21, 22) des Prepregs aus einem Harz, das mit einem Hybridgewebe aus Glasfasern und Carbonfasern verstärkt ist, zumindest eine Schicht (11, 21) aufweist, die radial ganz innen so angeordnet ist, dass sie mit der im Kanal geführten Luft in Berührung steht.

3. Kanal gemäß einer der bisherigen Ansprüche, wobei die zumindest eine Schicht (23) des Prepregs aus einem Harz, das mit einem Glasfasergewebe verstärkt ist, eine Schicht aufweist, die radial ganz außen liegt, um den von der Schicht eingeschlossenen Teil von der äußeren Umgebung elektrisch zu isolieren.

4. Kanal gemäß irgendeinem der bisherigen Ansprüche, wobei der Kanal eine externe Beschichtung (13) aufweist, die nur aus einem Harz besteht.

5. Kanal gemäß Anspruch 3, **dadurch gekennzeichnet, dass** der Kanal besitzt:
- eine erste innere Schicht (21) und eine zweite äußere Schicht (22), die beide aus einem Prepreg aus einem Harz bestehen, das mit einem Hybridgewebe aus Glasfasern und Carbonfasern verstärkt ist;
- eine Verstärkungsschicht (24) aus einem Faservlies, die zwischen der ersten Schicht (21) und der zweiten Schicht (22) liegt; und
- eine Endschicht (23) aus einem Prepreg aus einem Harz, das mit einem Glasfasergewebe verstärkt ist und auf der Schicht (22) angeordnet ist.

6. Kanal gemäß Anspruch 5, **dadurch gekennzeichnet, dass** der Kanal weiters ringförmige Verstärkungsausformungen (25) besitzt, die koaxial zum Kanal verlaufen und über dessen Länge angeordnet sind.

7. Kanal gemäß Anspruch 6, wobei die Verstärkungsausformungen (25) als Vielzahl von abwechselnden ringförmigen Schichten (26, 27) des Prepregs aus einem Phenolharz, das mit einem Hybridgewebe aus Glasfasern und Carbonfasern verstärkt ist, sowie aus einem Phenolharz ausgebildet sind, das mit einem Glasfasergewebe verstärkt ist.

8. Kanal gemäß Anspruch 4, **dadurch gekennzeichnet, dass** der Kanal besitzt:
- eine innerste Schicht (11) aus einem Prepreg aus einem Harz, das mit Glasfasern und Carbonfasern verstärkt ist,
- eine Zwischenschicht (12) aus einem Prepreg aus einem Harz, das mit einem Glasfasergewebe verstärkt ist, und
- eine äußerste Schicht (13), die nur aus einem Harz besteht.

9. Kanal gemäß irgendeinem der bisherigen Ansprüche, **dadurch gekennzeichnet, dass** sowohl das Verstärkungsgewebe aus Glasfasern als auch das Hybridgewebe aus Glasfasern und Carbonfasern eine Leinenbindung besitzen.

## Revendications

1. Conduit multicouches (10, 20) pour distribution d'air utilisé dans les systèmes d'air conditionné de véhicules, en particulier d'avions, qui comprennent au moins une couche (12, 23) d'un préimprégné de résine renforcé d'un tissu de fibre de verre et **caractérisé en ce qu'**il comprend au moins une couche (11 ; 21, 22) de préimprégné de résine renforcé d'un tissu hybride de fibre de verre et de fibre de carbone, lesdites couches étant superposées de manière coaxiale.

2. Conduit selon la revendication 1, **caractérisé en ce qu'**une couche au moins (11; 21, 22) de préimprégné de résine renforcé d'un tissu hybride de fibre de verre et de fibre de carbone comprend au moins une couche (11, 21) disposée dans la position radialement la plus intérieure, de façon à être en contact avec l'air transporté par le tuyau.

3. Conduit selon l'une quelconque des revendications précédentes, dans lequel ladite au moins une couche (23) de préimprégné de résine renforcé d'un tissu de fibre de verre comprend une couche disposée dans la position radialement la plus extérieure, de façon à isoler électriquement de l'environnement extérieur la partie enfermée par ladite couche.

4. Conduit selon l'une quelconque des revendications précédentes, qui comprend également un revêtement extérieur (13) en résine seule.

5. Conduit selon la revendication 3, **caractérisé en ce qu'**il possède :
une première couche intérieure (21) et une deuxième couche extérieure (22) qui sont toutes deux en préimprégné de résine renforcé d'un tissu hybride de fibre de verre et de fibre de carbone ;
une couche de renforcement (24) de tissu non tissé interposée entre ladite première couche (21) et ladite deuxième couche (22) ; et
une couche finale (23) de préimprégné de résine renforcé d'un tissu en fibre de verre, disposée sur ladite couche (22).

6. Conduit selon la revendication 5, **caractérisé en ce qu'**il présente également des renforts annulaires (25) disposés longitudinalement de manière coaxiale par rapport audit conduit.

7. Conduit selon la revendication 6, dans lequel lesdits renforts (25) sont constitués d'une pluralité de couches annulaires alternées (26, 27) de préimprégné de résine phénolique renforcé d'un tissu hybride de fibre de verre et de fibre de carbone et de préimprégné de résine phénolique renforcé d'un tissu de fibre de verre.

8. Conduit selon la revendication 4, **caractérisé en ce qu'**il possède :
une couche intérieure (11) de préimprégné de résine renforcé d'un tissu de fibre de verre et de fibre de carbone,
une couche intermédiaire (12) de préimprégné de résine renforcé d'un tissu de fibre de verre, et
une couche extérieure (13) de résine seule.

9. Conduit selon l'une quelconque des revendications précédentes, **caractérisé en ce que** le tissu de renforcement en fibre de verre et le tissu hybride de fibre de verre et de fibre de carbone sont tous deux des tissus de type uni.
